(19) Europäisches Patentamt
European Patent Office
Office européen des brevets

(11) Veröffentlichungsnummer : **0 056 574**
**B1**

(12) # EUROPÄISCHE PATENTSCHRIFT

(45) Veröffentlichungstag der Patentschrift : **13.03.85**

(21) Anmeldenummer : **82100037.9**

(22) Anmeldetag : **07.01.82**

(51) Int. Cl.⁴ : **C 07 C143/675**, C 09 B 29/30

---

(54) **Naphtholsulfonsäureverbindungen, ihre Herstellung und Verwendung als Kupplungskomponenten.**

---

(30) Priorität : **15.01.81 DE 3100978**

(43) Veröffentlichungstag der Anmeldung : **28.07.82 Patentblatt 82/30**

(45) Bekanntmachung des Hinweises auf die Patenterteilung : **13.03.85 Patentblatt 85/11**

(84) Benannte Vertragsstaaten :
**CH DE FR GB LI**

(56) Entgegenhaltungen :
**DE-A- 3 009 522**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Stöhr, Frank-Michael, Dr.**
**Weidenweg 25**
**D-5093 Burscheid (DE)**
Erfinder : **Wild, Peter, Dr.**
**Hainstrasse 7**
**D-6305 Alten-Buseck (DE)**
Erfinder : **Nickel, Horst, Dr.**
**Fontanestrasse 23**
**D-5090 Leverkusen 1 (DE)**

**EP 0 056 574 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind ammonium- und sulfonsäure-gruppenhaltige Verbindungen, die in der Betainform der Formel

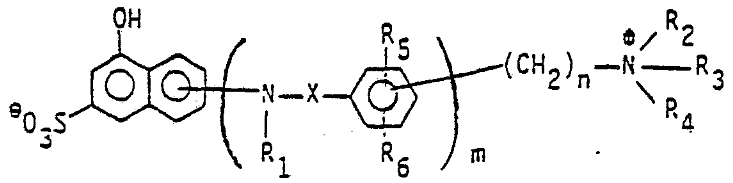

(I)

entsprechen, worin

X —CO—, —$SO_2$—,

$R_1$ Wasserstoff, Alkyl,

$R_2$, $R_3$ und $R_4$ unabhängig voneinander Alkyl, Alkenyl, Aralkyl,

oder $R_4$

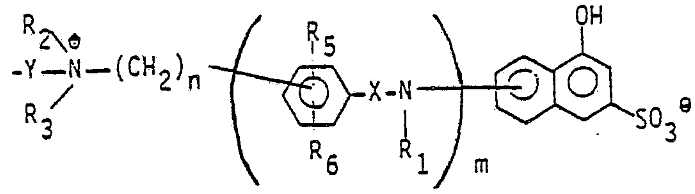

Y Alkylen, Xylylen,

m 1 oder 2,

n 0 oder 1,

$R_5$ und $R_6$ unabhängig voneinander Wasserstoff, Alkyl, Alkoxy, Halogen bedeuten, und wenn n = 1 zusätzlich

$R_2$ oder $R_4$ Amino, Alkylamino, Dialkylamino, Aryl, Cycloalkyl,

$R_2$ und $R_3$ zusammen mit dem an sie gebundenen Stickstoff-Atom einen 5- oder 6-gliedrigen Ring,

$R_2$, $R_3$ und $R_4$ zusammen mit dem an sie gebundenen Stickstoffatom einen Pyridiniumring, eine Gruppe der Formel

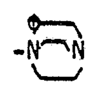

oder Wasserstoff,

Y Arylen, Benzylen oder einen Rest der Formel

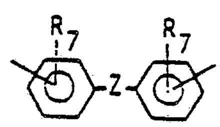

Z die direkte Bindung, —$(CH_2)_p$—, —O—, —$O(CH_2)_p$—O—, —$SO_2$—, —NHCO—, —NHCONH—, $NHCO(CH_2)_p$—CONH—, —CONH—$(CH_2)_p$—NHCO—,

p 1, 2 oder 3 und

$R_7$ Wasserstoff, Alkyl, Alkoxy, Halogen bedeuten,

und worin die cyclischen und acyclischen Reste nichtionogene Substituenten enthalten können.

Nichtionogene Substituenten im Sinne der vorliegenden Erfindung sind nicht dissoziierenden Substituenten wie zum Beispiel Cyan, Hydroxy, Halogen, wie Fluor, Chlor oder Brom, Alkyl, Alkoxy, wobei Alkyl und Alkoxy vorzugsweise 1-4 C-Atome enthalten.

Substituenten der Alkylreste $R_1$-$R_7$ sind beispielsweise halogen, Hydroxy, $C_1$-$C_4$-Alkoxy oder Cyan.

Halogen steht vorzugsweise für Fluor, Chlor oder Brom.

Allgemein werden unter Alkylresten insbesondere solche mit 1-8 C-Atomen verstanden und unter Alkenylresten mit 2-4 C-Atomen.

Cycloalkyl steht z. B. für ggf. durch $C_1$-$C_5$-Alkyl substituiertes Cyclopentyl oder Cyclohexyl.

Unter Aryl wird vorzugsweise Phenyl und unter Aralkyl benzyl- und Phenylethyl verstanden. Die Phenylringe können durch beispielsweise 1-3 nichtionogene Reste wie Halogen, $C_1$-$C_4$-Alkyl, $C_1$-$C_4$-Alkoxy oder Cyan substituiert sein.

Die reste $R_2$ und $R_3$ bilden zusammen mit dem Stickstoffatom, an das sie gebunden sind, ggf. durch $C_1$-$C_4$-Alkyl substituiertes Pyrrolidin, Piperidin, Morpholin, Piperazin oder N-Hydroxyethyl-piperazin.

Von den Verbindungen der Formel (I) sind die der Formel

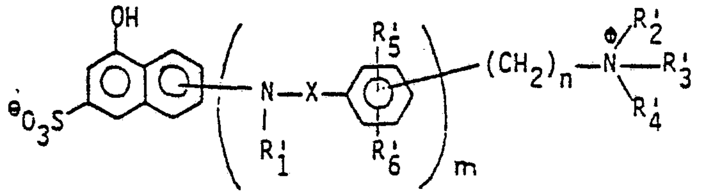 (II)

worin

X —CO— oder —$SO_2$,

$R_1'$ Wasserstoff oder ggf. durch Hydroxy, Halogen, Cyan oder $C_1$-$C_4$-Alkoxy subst. $C_1$-$C_4$-Alkyl,

$R_2'$, $R_3'$ und $R_4'$ unabhängig voneinander ggf. durch Hydroxy, Halogen, Cyan oder $C_1$-$C_4$-Alkoxy substituiertes $C_1$-$C_4$-Alkyl, $C_2$-$C_4$-Alkenyl oder ggf. durch Halogen, $C_1$-$C_4$-Alkyl oder $C_1$-$C_4$-Alkoxy substituiertes Benzyl oder Phenyl-ethyl,

oder $R_4'$

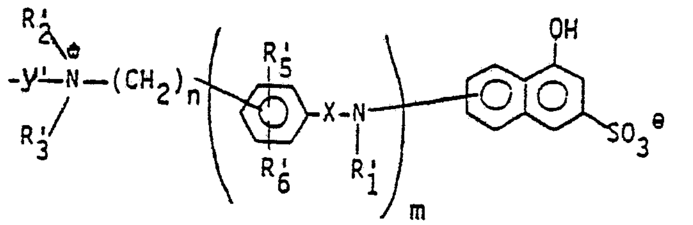

Y' ggf. durch Hydroxy, Halogen, Cyan oder $C_1$-$C_4$-Alkoxy substituiertes $C_1$-$C_8$-Alkyl oder ggf. durch Halogen, $C_1$-$C_4$-Alkyl oder $C_1$-$C_4$-Alkoxy substituiertes Xylylen,

m 1 oder 2,

n 0 oder 1,

$R_5'$ und $R_6'$ unabhängig voneinander Wasserstoff, $C_1$-$C_4$-Alkyl, $C_1$-$C_4$-Alkoxy oder Halogen bedeuten und

wenn n = 1 zusätzlich

$R_2'$ oder $R_4'$ Amino, ggf. durch Hydroxy, halogen, Cyan oder $C_1$-$C_4$-Alkoxy substituiertes $C_1$-$C_4$-Alkylamino oder $C_1$-$C_4$-Dialkylamino, ggf. durch Hydroxy, Halogen, Cyan, $C_1$-$C_4$-Alkyl oder $C_1$-$C_4$-Alkoxy substituiertes Phenyl oder ggf. durch $C_1$-$C_4$-Alkyl substituiertes Cyclopentyl oder Cyclohexyl,

$R_2'$ und $R_3'$ zusammen mit dem an sie gebundenen N-Atom ein ggf. durch $C_1$-$C_4$-Alkyl substituiertes Pyrrolidin, Piperidin, Morpholin, Piperazin oder N-Hydroxyethylpiperazin,

$R_2'$, $R_3'$ und $R_4'$ zusammen mit dem an sie gebundenen N-Atom ein Pyridiniumring , eine Gruppe der Formel

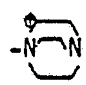

oder Wasserstoff und

Y' ggf. durch Hydroxy, Halogen, Cyan, $C_1$-$C_4$-Alkyl oder $C_1$-$C_4$-Alkoxy substituiertes Phenylen, Benzylen oder ein Rest der Formel

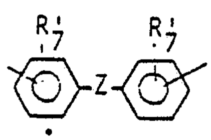

$R_7'$ Wasserstoff, $C_1$-$C_4$-Alkyl, $C_1$-$C_4$-Alkoxy oder Halogen bedeuten und

Z und p die Bedeutung der Formel (I) haben,

besonders zu nennen.

In bevorzugten Verbindungen (II) steht X für CO.

Von diesen Verbindungen sind wiederum die der Formel

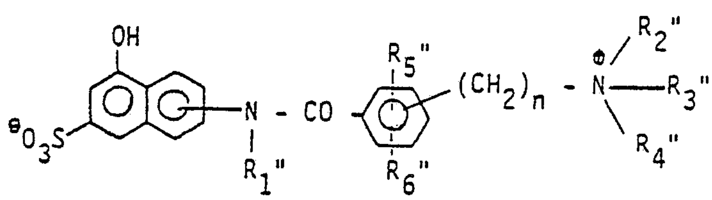 (III)

worin

$R_1''$ Wasserstoff oder Methyl,

$R_2''$, $R_3''$ und $R_4''$ unabhängig voneinander ggf. durch Hydroxy, Chlor, Brom, Cyan oder $C_1$-$C_4$-Alkoxy substituiertes $C_1$-$C_4$-Alkyl, $C_2$-$C_4$-alkenyl oder ggf. durch Chlor, Brom, $C_1$-$C_4$-Alkyl oder $C_1$-$C_4$-Alkoxy substituiertes Benzyl oder Phenylethyl,

oder $R_4''$

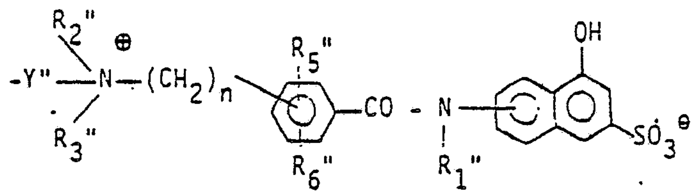

Y″ ggf. durch Hydroxy, Chlor, Brom, Cyan oder $C_1$-$C_4$-Alkoxy substituiertes $C_1$-$C_4$-Alkyl oder ggf. durch Chlor, Brom, $C_1$-$C_4$-Alkyl oder $C_1$-$C_4$-Alkoxy substituiertes Xylylen,

n 0 oder 1

$R_5''$ und $R_6''$ unabhängig voneinander Wasserstoff, Methyl, Methoxy, Ethoxy oder Chlor bedeuten, und wenn n = 1 zusätzlich

$R_2''$ oder $R_4''$ Amino, ggf. durch Hydroxy, Chlor, Brom, Cyan, $C_1$-$C_4$-Alkyl oder $C_1$-$C_4$-Alkoxy substituiertes Phenyl oder ggf. durch $C_1$-$C_4$-Alkyl substituiertes Cyclopentyl oder Cyclohexyl,

$R_2''$ und $R_3''$ zusammen mit dem an sie gebundenen N-Atom ein Pyrrolidin, Piperidin, Morpholin, Piperazin, N-Methyl-piperazin oder N-Hydroxyethylpiperazin und

$R_2''$, $R_3''$ und $R_4''$ zusammen mit dem an sie gebundenen N-Atom ein Pyridiniumring oder Wasserstoff bedeuten,

besonders zu nennen.

In bevorzugten Verbindungen (III) steht n für 0.

Von besonderem Interesse sind Verbindungen der Formel

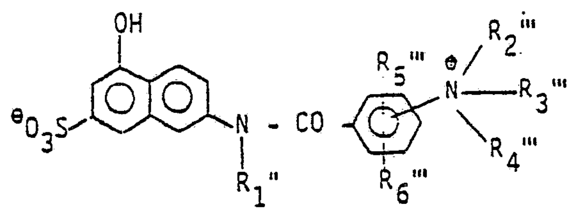

(IV)

worin

$R_1''$ die vorstehend genannte Bedeutung hat, und

$R_2'''$, $R_3'''$ und $R_4'''$ unabhängig voneinander ggf. durch Hydroxy, Chlor, Brom, Cyan oder $C_1$-$C_4$-Alkoxy substituiertes $C_1$-$C_4$-Alkyl, $C_2$-$C_4$-Alkenyl oder ggf. durch Chlor, Brom, $C_1$-$C_4$-Alkyl oder $C_1$-$C_4$-Alkoxy substituiertes Benzyl oder Phenylethyl und

$R_5'''$ und $R_6'''$ unabhängig voneinander Wasserstoff, Methyl, Methoxy, Ethoxy, Chlor oder Brom bedeuten.

Gegenstand der Erfindung ist ferner die Herstellung der Verbindungen (I). Sie erfolgt nach bekannten Verfahren in üblicher Art und Weise. Ausgangssubstanzen sind bei der Herstellung beispielsweise die Naphtholsulfonsäuren der Formel

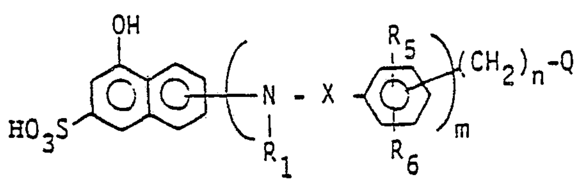

(A)

worin

Q 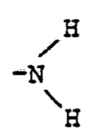 , 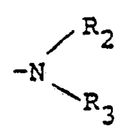 oder 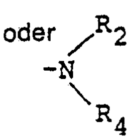

bedeutet, und

X, $R_1$-$R_6$, m und n die vorstehend genannte Bedeutung haben.

Durch Quaternierung bzw. stufenweise N-Alkylierung und anschließende Quarternierung erhält man die Verbindungen der Formel (I), die im allgemeinen als Betaine schwerlöslich und leicht zu isolieren sind. Als N-Alkylierungsmittel kommen beispielsweise Alkylhalogenide, β-Halogenpropionitrile, Halogenhydrine, Alkylenoxide, Alkylester der Schwefelsäure oder Alkylester organischer Sulfonsäuren in Betracht, wie Methylchlorid, -bromid oder -jodid, Ethylchlorid, -bromid oder -jodid, Propylbromid oder -jodid, Benzylchlorid oder -bromid, β-Chlorpropionitril, Ethylenchlorhydrin, Ethylen- oder Propylenoxid, Dimethylsulfat, Diethylsulfat, Benzolsulfonsäuremethylester, p-Toluolsulfonsäuremethyl, -ethyl, propyl- oder -butylester, Allylchlorid oder -bromid, Methallylchlorid oder -bromid, Trimethyloxonium-borfluorid, 1,4-Dichlor-2-propen, 1-Chlor-2-buten, 1,2-Dichlor-2-propen sowie Acrylnitril.

Die Reaktion kann entweder in Wasser oder in einem organischen Lösungsmittel, beispielsweise in Aceton, Methylethylketon oder Dimethylformamid durchgeführt werden, vorzugsweise aber in Wasser.

Als säurebindendes Mittel kann beispielsweise Magnesiumoxid, Magnesiumcarbonat, Soda, Calciumcarbonat, Natriumbicarbonat oder Natronlauge eingesetzt werden. Die Alkylierungen werden gewöhnlich bei Raumtemperatur gemacht ; die Quaternierungen können entweder ebenfalls bei dieser Temperatur oder bei erhöhter Temperatur und gegebenenfalls unter Druck vorgenommen werden.

Ferner können Verbindungen der Formel (I) erhalten werden, indem man Halogenide der Formel

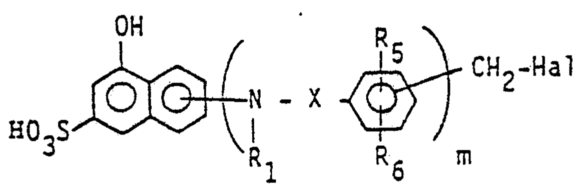

(B)

worin

Hal Chlor, Brom oder Jod bedeutet, und

X, $R_1$, $R_5$, $R_6$ und m die obengenannte Bedeutung haben,

mit Verbindungen der Formel

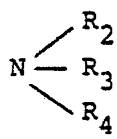

worin $R_2$, $R_3$ und $R_4$ die in Formel (I) genannte Bedeutung haben, umsetzt.

Eine weitere Möglichkeit Verbindungen der Formel (I) herzustellen, ist die Umsetzung von Naphtholsulfonsäuren der Formel

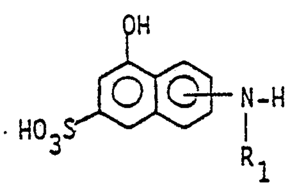

(C)

worin $R_1$ die vorstehend genannte Bedeutung hat, mit Carbon- oder Sulfonsäurederivaten der allgemeinen Formel

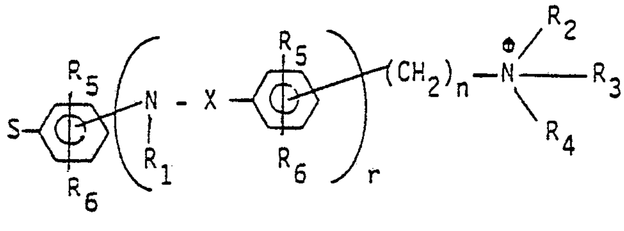

(D)

worin
S ein Carbon- oder Sulfonsäurederivat, vorzugsweise ein Säurechlorid und
r 0 oder 1 bedeuten, und
X, $R_1$-$R_6$ und n die vorstehend genannte Bedeutung haben.

Die Verbindungen der Formel (I) sind wertvolle Kupplungskomponenten in der Farbstoffchemie.

Beispiel 1

145 g (0,4 Mol) 7-[(4-Aminobenzoyl)-amino]-4-hydroxy-2-naphthalinsulfonsäure werden in 700 ml $H_2O$ angeschlämmt und mit 40 %iger NaOH-Lösung neutral gelöst. Dann tropft man innerhalb einer halben Stunde 160 ml Dimethylsulfat so hinzu, daß die Temperatur nicht über 35 °C ansteigt. Der pH-Wzert wird durch zutropfen von ca. 350 ml 20 %iger Sodalösung zwischen 6 und 7 gehalten. Man rührt eine Stunde nach, heizt dann auf 100 °C auf, um überschüssiges Dimethylsulfat zu zersetzen, läßt abkühlen und isoliert das ausgefallene Produkt. Man erhält 220 g feuchte Paste, die als solche weiter verwendet werden kann. Die erhaltene Verbindung (Fp > 300 °C Zersetzung) entspricht nach NMRspektroskopischer Untersuchung der Formel (1). Die Verbindung löst sich in 20 % Sodalösung. Papierchromatographischer $R_f$-Wert : 0,56 (Fließmittel : Butanol/Pyridin/Wasser/Ammoniak im Verhältnis 40 : 50 : 40 : 10). Durch Umsetzung mit einer Diazokomponente läßt sich eine Ausbeute von 95 % bestimmen.

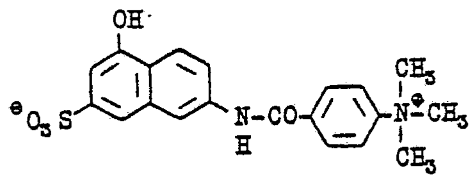

(1)

Beispiel 2

7-[(3-Aminobenzoyl)-amino]-4-hydroxy-2-naphthalinsulfonsäure wird analog Beispiel 1 umgesetzt, und man erhält das Produkt der Formel (2).

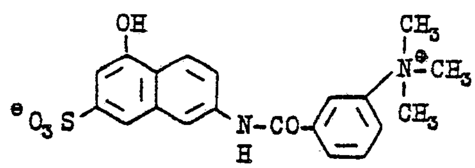

(2)

Beispiel 3

36 g (0,14 Mol) 4-Hydroxy-7-(methylamino)-2-naphthalinsulfonsäure werden in 300 ml $H_2O$ bei pH 6 mit 40 %iger NaOH-Lösung gelöst. 29,5 g 4-Nitrobenzoylchlorid werden in 200 ml Eiswasser mit Emulgator L5 verrührt und zugesetzt. Der pH-Wert wird mit 20 %iger Sodalösung auf 6 gehalten. Die Umsetzung ist nach 3 Stunden beendet. Anschließend wird auf 40 °C erwärmt, mit 35 g $Na_2S$ versetzt und der pH mit Bicarbonat-Lösung auf 10 gestellt. Nach 2 Stunden ist die Reduktion beendet. Man stellt HCl pH 2 ein, rührt 1 Stunde nach, stellt mit 40 %iger NaOH-Lösung pH 9 ein und klärt vom Schwefel ab. Die Lösung wird mit HCL wieder auf pH 2 gestellt und das ausgefallene Produkt isoliert. Die Quaternierung erfolgt analog Beispiel 1, und man erhält das Produkt der Formel (3).

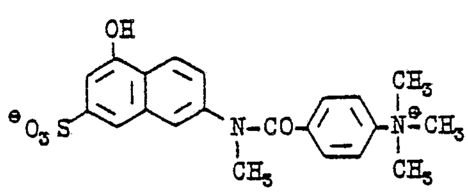

(3)

Beispiel 4

6-Amino-4-hydroxy-2-naphthalinsulfonsäure wird analog Beispiel 3 umgesetzt, und man erhält das Produkt der Formel (4).

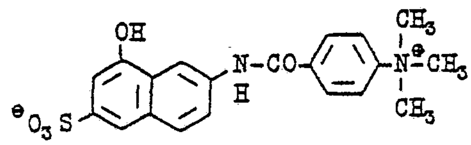

(4)

Beispiel 5

24,9 g (0,05 Mol) 7-[[(4-[(4-Aminobenzoyl)-amino]-benzoyl]-amino]-4-hydroxy-2-naphthalinsulfonsäure werden in 200 ml Dimethylformamid gelöst und mit 16 g festem Kaliumcarbonat versetzt.

Dazu tropft man 30 ml Dimethylsulfat und erwärmt auf 60 °C. Nachdem die Reaktion lt. DC beendet ist, gibt man 25 ml $H_2O$ hinzu, erhitzt auf 100 °C, läßt abkühlen, filtriert und erhält ein Produkt der Formel (5).

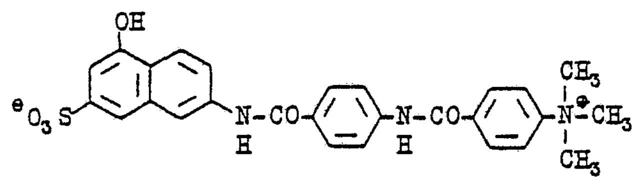

(5)

Beispiel 6

a) 89,5 g (0,25 Mol) 7-[(4-Aminobenzoyl)-amino]-4-hydroxy-2-naphthalinsulfonsäure werden in 400 ml Dimethylformamid gelöst und mit 75 g festem Kaliumcarbonat versetzt. Dann tropft man innerhalb von 4 Stunden 70 ml Dimethylsulfat hinzu und läßt 2 Stunden nachrühren. Nach der üblichen Zersetzung des überschüssigen Dimethylsulfates isoliert man 190,5 g Paste eines Produktes der Formel (6).

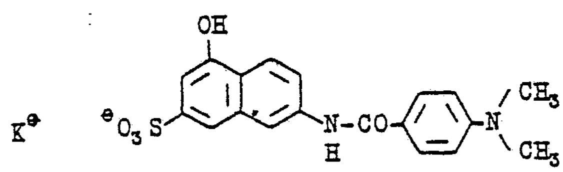

(6)

b) 77 g Paste der Verbindung (6) werden in 200 ml Wasser angeschlämmt (pH 6-7), und dann tropft man bei Raumtemperatur innerhalb einer halben Stunde 14 ml Diethylsulfat hinzu. Man läßt 5 Stunden rühren, erhitzt 2 Stunden auf 100 °C und erhält 170 ml einer Lösung der Verbindung der Formel (7).

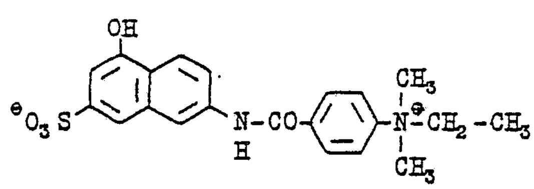

(7)

c) 19 g Paste der Verbindung (6) werden in 50 ml Wasser angeschlämmt. Man setzt sehr langsam 3 ml Propylenoxyd hinzu. Der pH-Wert wird mit 28 %iger HCl auf 7 gehalten ; die Reaktionstemperatur beträgt 50-60 °C. Man erhält ein Produkt der Formel (8).

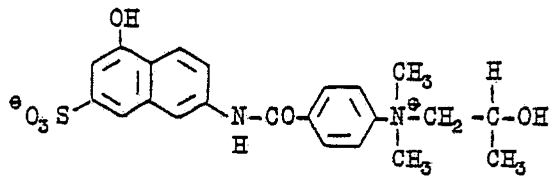

(8)

d) 19 g Paste der Verbindung (6) werden in 50 ml Wasser angeschlämmt (pH 7) und bei 50-60 °C mit 3,7 ml Benzylchlorid tropfenweise versetzt. Nach einer Reaktionszeit von 3 Stunden erhält man ein Produkt der Formel (9).

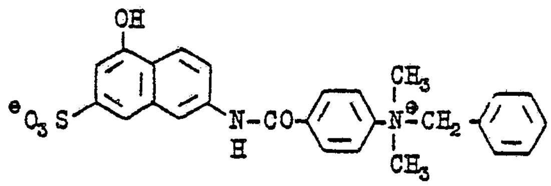

(9)

**Ansprüche**

1. Ammoniumgruppenhaltige Naphtholsulfonsäureverbindungen, die in der Betainform der allgemeinen Formel

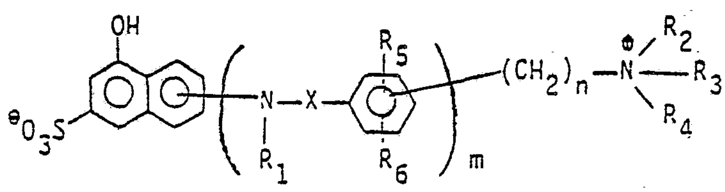

entsprechen,
worin
X —CO—, —$SO_2$—,
$R_1$ Wasserstoff, Alkyl,
$R_2$, $R_3$ und $R_4$ unabhängig voneinander Alkyl, Alkenyl, Aralkyl

oder $R_4$

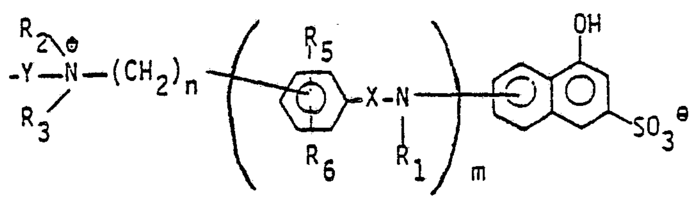

Y Alkylen, Xylylen,
m 1 oder 2,
n 0 oder 1,
$R_5$ und $R_6$ unabhängig voneinander Wasserstoff, Alkyl, Alkoxy, Halogen bedeuten, und
wenn n = 1 zusätzlich
$R_2$ oder $R_4$ Amino, Alkylamino, Dialkylamino, Aryl, Cycloalkyl,
$R_2$ und $R_3$ zusammen mit dem an sie gebundenen Stickstoff-Atom einen 5- oder 6-gliedrigen Ring,
$R_2$, $R_3$ und $R_4$ zusammen mit dem an sie gebundenen Stickstoffatom einen Pyridiniumring eine Gruppe der Formel

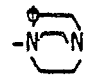

oder Wasserstoff,
Y Arylen, Benzylen oder einen Rest der Formel

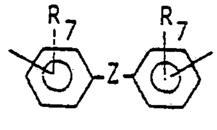

Z die direkte Bindung, $—(CH_2)_p—$, $—O—$, $—O—(CH_2)_p—O$, $—SO_2—$, $—NHCO—$, $—NHCONH—$, $NHCO—(CH_2)_p—CONH—$, $—CONH—(CH_2)_p—NHCO—$,

p 1, 2 oder 3 und

$R_7$ wasserstoff, Alkyl, Alkoxy, Halogen bedeuten,

und worin die cyclischen und acyclischen Reste nichtionogene Substituenten enthalten können.

2. Naphtholsulfonsäureverbindungen, die in der Betainform der allgemeinen Formel

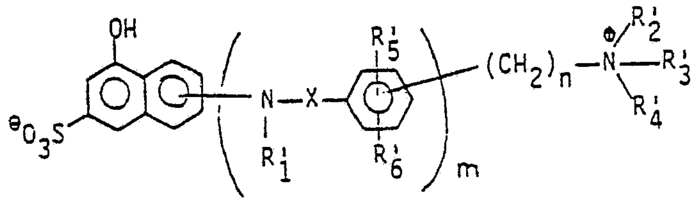

entsprechen,

worin

X $—CO—$ oder $—SO_2—$,

$R'_1$ Wasserstoff oder gegebenenfalls durch Hydroxy, Halogen, Cyan oder $C_1$-$C_4$-Alkoxy subst. $C_1$-$C_4$-Alkyl,

$R'_2$, $R'_3$ und $R'_4$ unabhängig voneinander gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl oder $C_1$-$C_4$-Alkoxy substituiertes Benzyl oder Phenylethyl,

oder $R_4'$

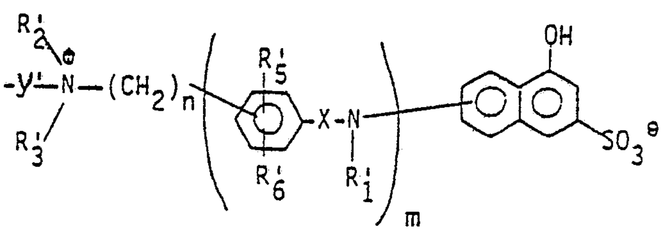

Y' gegebenenfalls durch Hydroxy, Halogen, Cyan oder $C_1$-$C_4$-Alkoxy substituiertes $C_1$-$C_8$-Alkyl oder gegebenenfalls durch Halogen, $C_1$-$C_4$-Alkyl oder $C_1$-$C_4$-Alkyl oder $C_1$-$C_4$-Alkoxy substituiertes Xylylen,

m 1 oder 2

n 0 oder 1,

$R_5'$ und $R_6'$ unabhängig voneinander Wasserstoff, $C_1$-$C_4$-Alkyl, $C_1$-$C_4$-Alkoxy oder Halogen bedeuten und

wenn n = 1 zusätzlich

$R_2'$ oder $R_4'$ Amino, gegebenenfalls durch Hydroxy, Halogen, Cyan oder $C_1$-$C_4$-Alkoxy substituiertes $C_1$-$C_4$-Alkylamino oder $C_1$-$C_4$-Dialkylamino, gegebenenfalls durch Hydroxy, Halogen, Cyan, $C_1$-$C_4$-Alkyl oder $C_1$-$C_4$-Alkoxy substituiertes Phenyl oder gegebenenfalls durch $C_1$-$C_4$-Alkyl substituiertes Cyclopentyl oder Cyclohexyl,

$R_2'$ und $R_3'$ zusammen mit dem an sie gebundenen N-Atom ein gegebenenfalls durch $C_1$-$C_4$-Alkyl substituiertes Pyrrolidin, Piperidin, Morpholin, Piperazin oder N-Hydroxyethylpiperazin,

$R_2'$, $R_3'$ und $R_4'$ zusammen mit dem an sie gebundenen N-Atom ein Pyridiniumring, eine Gruppe der Formel

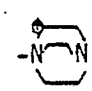

oder Wasserstoff und

Y' gegebenenfalls durch Hydroxy, Halogen, Cyan, $C_1$-$C_4$-Alkyl oder $C_1$-$C_4$-Alkoxy substituiertes Phenylen, Benzylen oder ein Rest der Formel

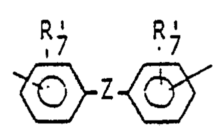

$R_7'$ Wasserstoff, $C_1$-$C_4$-Alkyl, $C_1$-$C_4$-Alkoxy oder Halogen bedeuten und

Z und p die Bedeutung des Anspruchs 1 haben.

3. Naphtholsulfonsäureverbindungen, die in der Betainform der allgemeinen Formel

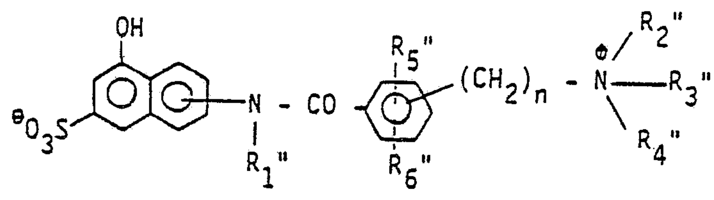

entsprechen,
worin

$R_1''$ Wasserstoff oder Methyl,

$R_2''$, $R_3''$ und $R_4''$ unabhängig voneinander gegebenenfalls durch Hydroxy, Chlor, Brom, Cyan oder $C_1$-$C_4$-Alkoxy substituiertes $C_1$-$C_4$-Alkyl, $C_2$-$C_4$-Alkenyl oder gegebenenfalls durch Chlor, Brom, $C_1$-$C_4$-Alkyl oder $C_1$-$C_4$-Alkoxy substituiertes Benzyl oder Phenylethyl,

oder $R_4''$

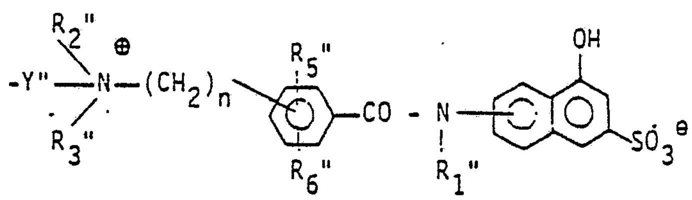

Y'' gegebenfalls durch Hydroxy, Chlor, Brom, Cyan oder $C_1$-$C_4$-Alkoxy substituiertes $C_1$-$C_4$-Alkyl oder gegebenenfalls durch Chlor, Brom, $C_1$-$C_4$-Alkyl oder $C_1$-$C_4$-Alkoxy substituiertes Xylylen,

n 0 oder 1,

$R_5''$ und $R_6''$ unabhängig voneinander Wasserstoff, Methyl, Methoxy, Ethoxy oder Chlor bedeuten, und

wenn n = 1 zusätzlich

$R_2''$ oder $R_4''$ Amino, gegebenenfalls durch Hydroxy, Chlor, Brom, Cyan, $C_1$-$C_4$-Alkyl oder $C_1$-$C_4$-Alkoxy substituiertes Phenyl oder gegebenenfalls durch $C_1$-$C_4$-Alkyl substituiertes Cyclopentyl oder Cyclohexyl,

$R_2''$ und $R_3''$ zusammen mit dem an sie gebundenen N-Atom ein Pyrrolidin, Piperidin, Morpholin, Piperazin, N-Methylpiperazin oder N-Hydroxyethylpiperazin und

$R_2''$, $R_3''$ und $R_4''$ zusammen mit dem an sie gebundenen N-Atom ein Pyridiniumring oder Wasserstoff bedeuten.

4. Naphtholsulfonsäureverbindungen, die in der Betainform der allgemeinen Formel

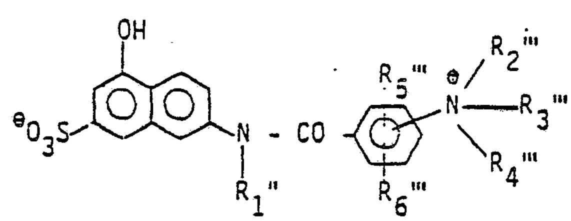

entsprechen,
worin

$R_1''$ Wasserstoff oder Methyl,

$R_2'''$, $R_3'''$, $R_4'''$ unabhängig voneinander gegebenenfalls durch Hydroxy, Chlor, Brom, Cyan oder $C_1$-$C_4$-Alkoxy substituiertes $C_1$-$C_4$-Alkyl, $C_2$-$C_4$-Alkenyl oder gegebenenfalls durch Chlor, Brom, $C_1$-$C_4$-Alkyl oder $C_1$-$C_4$-Alkoxy substituiertes Benzyl oder Phenylethyl und

$R_5'''$ und $R_6'''$ unabhängig voneinander Wasserstoff, Methyl, Methoxy, Ethoxy, Chlor oder Brom bedeuten.

5. Verfahren zur Herstellung von Naphtholsulfonsäureverbindungen des Anspruchs 1, dadurch gekennzeichnet, daß man Naphtholsulfonsäuren der Formel

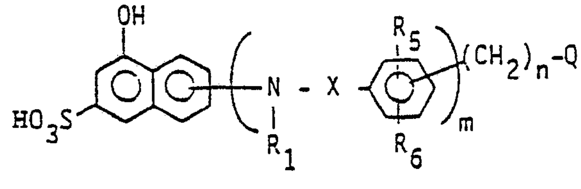

worin

Q 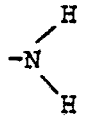 , 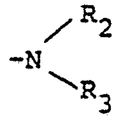 oder 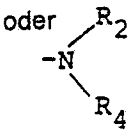

bedeutet, und

X, $R_1$-$R_8$, m und n die in Anspruch 1 genannte Bedeutung haben,

quaterniert oder alkyliert und quaterniert.

6. Verfahren zur Herstellung von Naphtholsulfonsäureverbindungen des Anspruchs 1, dadurch gekennzeichnet, daß man Halogenide der Formel

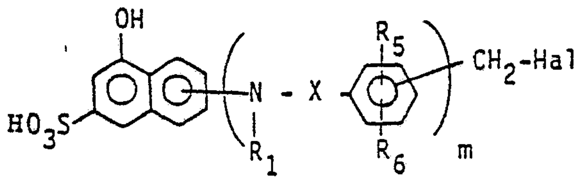

worin

Hal Chlor, Brom oder Jod bedeutet, und

X, $R_1$, $R_5$, $R_6$ und m die in Anspruch 1 genannte Bedeutung haben,

mit Verbindungen der Formel

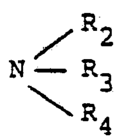

worin $R_2$, $R_3$ und $R_4$ die in Anspruch 1 genannte Bedeutung haben, umsetzt.

7. Verfahren zur Herstellung von Naphtholsulfonsäure Verbindungen des Anspruchs 1, dadurch gekennzeichnet, daß man Naphtholsulfonsäuren der Formel

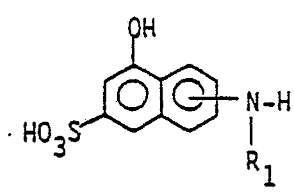

worin $R_1$ die in Anspruch 1 genannte Bedeutung hat, mit Carbon- oder Sulfonsäurederivaten der allgemeinen Formel

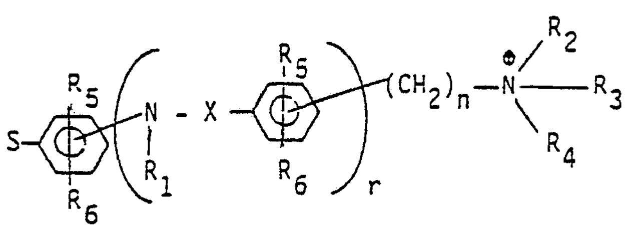

worin

S ein Carbon- oder Sulfonsäurederivat, vorzugsweise ein Säurechlorid,

r 0 oder 1 bedeuten, und

X, $R_1$-$R_6$ und n die in Anspruch 1 genannte Bedeutung haben, umsetzt.

8. Verwendung der Naphtholsulfonsäureverbindungen des Anspruchs 1 als Kupplungskomponenten zur Herstellung von Azofarbstoffen.

## Claims

1. Naphtholsulphonic acid compounds which contain ammonium groups and which, in the betaine form, correspond to the general formula

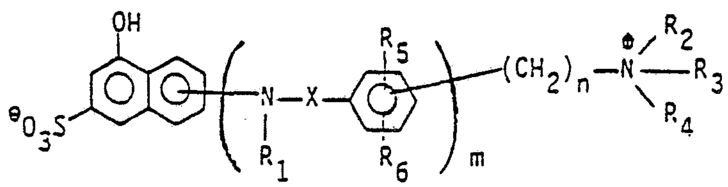

wherein

X denotes —CO— or $—SO_2—$,

$R_1$ denotes hydrogen or alkyl,

$R_2$, $R_3$ and $R_4$, independently of one another,

$R_4$ denotes alkyl, alkenyl or aralkyl, or

$R_4$ 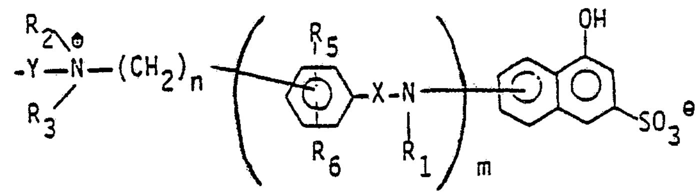

Y denotes alkylene or xylylene,

m denotes 1 or 2,

n denotes 0 or 1, and

$R_5$ and $R_6$, independently of one another, denote hydrogen, alkyl, alkoxy or halogen,

and in addition, if n = 1,

$R_2$ or $R_4$ denotes amino, alkylamino, dialkylamino aryl or cycloalkyl,

$R_2$ and $R_3$, together with the nitrogen atom which is bonded to them, denote a 5-membered or 6-membered ring,

$R_2$, $R_3$ and $R_4$, together with the nitrogen atom which is bonded to them, denote a pyridinium ring, a group of the formula

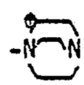

or hydrogen,

Y denotes arylene, benzylene or a radical of the formula

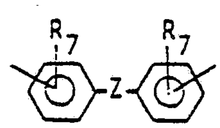

Z denotes a direct bond, $—(CH_2)_p—$, —O—, $—O—(CH_2)u—O$, $—SO_2—$, —NHCO—, —NHCONH—, NHCO(CH2)p—CONH— or $—CONH—(CH_2)_p—NHCO—$,

p denotes 1, 2 or 3, and

$R_7$ denotes hydrogen, alkyl, alkoxy or halogen,

and wherein the cyclic and acyclic radicals can contain non-ionic substituents.

2. Naphtholsulphonic acid compounds which, in the betaine form, correspond to the general formula

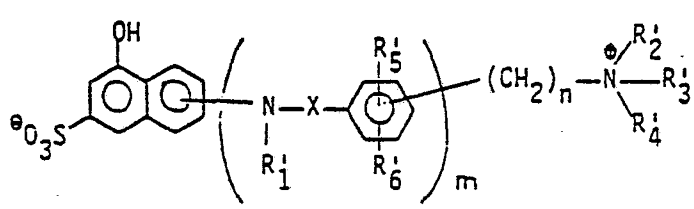

wherein

X denotes —CO— or —$SO_2$—,

$R_1'$ denotes hydrogen or $C_1$-$C_4$-alkyl which is optionally substituted by hydroxyl, halogen, cyano or $C_1$-$C_4$-alkoxy,

$R_2'$, $R_3'$ and $R_4'$, independently of one another, denote $C_1$-$C_4$-alkyl which is optionally substituted by hydroxyl, halogen, cyano or $C_1$-$C_4$-alkoxy, $C_2$-$C_4$-alkenyl, or benzyl or phenylethyl which is optionally substituted by halogen, $C_1$-$C_4$-alkyl or $C_1$-$C_4$-alkoxy, or

$R_4'$ denotes

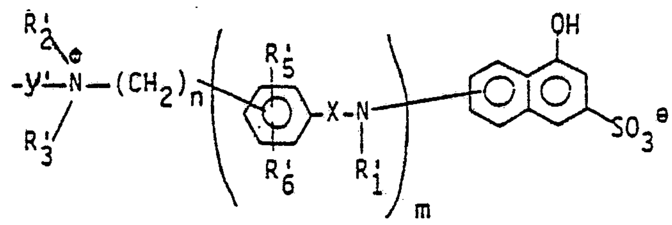

Y' denotes $C_1$-$C_8$-alkyl which is optionally substituted by hydroxyl, halogen, cyano or $C_1$-$C_4$-alkoxy, or xylylene which is optionally substitutated by halogen, $C_1$-$C_4$-alkyl or $C_1$-$C_4$-alkoxy,

m denotes 0 or 1, and

$R_5'$ and $R_6'$, independently of one another, denote hydrogen, $C_1$-$C_4$-alkyl, $C_1$-C-4-alkoxy or halogen, and in addition, if n = 1,

$R_2'$ or $R_4'$ denotes amino, $C_1$-$C_4$-alkylamino or $C_1$-$C_4$-dialkylamino which is optionally substituted by hydroxyl, halogen, cyano or $C_1$-$C_4$-alkoxy, phenyl which is optionally substituted by hydroxyl, halogen, cyano, $C_1$-$C_4$-alkyl or $C_1$-$C_4$-alkoxy, or optionally $C_1$-$C_4$-alkyl-substituted cyclopentyl or cyclohexyl,

$R_2'$ and $R_3'$ together with the N atom which is bonded to them, denote an optionally $C_1$-$C_4$-alkyl-substituted pyrrolidine, piperidine, morpholine, piperzine or N-hydroxyethylpiperazine,

$R_2'$, $R_3'$ and $R_4'$, together with the N atom which is bonded to them, denote a pyridinium ring, a group of the formula

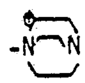

or hydrogen, and

Y' denotes phenylene which is optionally substituted by hydroxyl, halogen, cyano, $C_1$-$C_4$-alkyl or $C_1$-$C_4$-alkoxy, benzylene or a radical of the formula

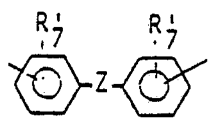

$R_7'$ denotes hydrogen, $C_1$-$C_4$-alkyl, $C_1$-$C_4$-alkoxy or halogen, and

Z and p have the meaning of Claim 1.

3. Naphtholsulphonic acid compounds which, in the betaine form, correspond to the general formula

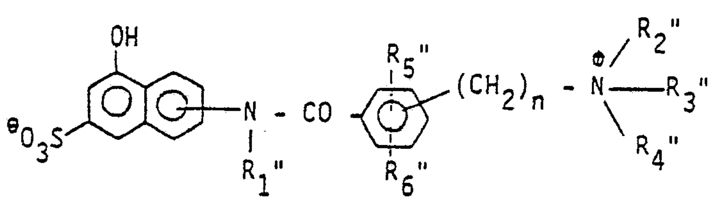

wherein

$R_1''$ denotes hydrogen or methyl,

$R_2''$, $R_3''$ and $R_4''$, independently of one another, denote $C_1$-$C_4$-alkyl which is optionally substituted by hydroxyl, chlorine, bromine, cyano or $C_1$-$C_4$-alkoxy, $C_2$-$C_4$-alkenyl, or benzyl or phenylethyl which is optionally substituted by chlorine, bromine, $C_1$-$C_4$-alkyl or $C_1$-$C_4$alkoxy,

or $R_4''$ denotes

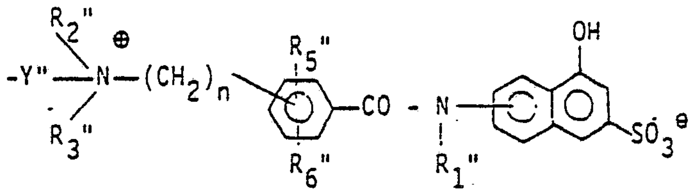

Y" denotes $C_1$-$C_4$-alkyl which is optionally substituted by hydroxyl, chlorine, bromine, cyano or $C_1$-$C_4$-alkoxy, or xylylene which is optionally substituted by chlorine, bromine, $C_1$-$C_4$-alkyl or $C_1$-$C_4$-alkoxy,

n denotes 0 or 1, and

$R_5$" and $R_6$", independently of one another, denote hydrogen, methyl, methoxy, ethoxy or chlorine,

and in addition, if n = 1,

$R_2$" or $R_4$" denote amino, phenyl which is optionally substituted by hydroxyl, chlorine, bromine, cyano, $C_1$-$C_4$-alkyl or $C_1$-$C_4$-alkoxy, or optionally $C_1$-$C_4$-alkyl-substituted cyclopentyl or cyclohexyl,

$R_2$" and $R_3$", together with the N atom which is bonded to them, denote a pyrrolidine, piperidine, morpholine, piperazine, N-methyl-piperazine or N-hydroxyethylpiperazine, and

$R_2$", $R_3$" and $R_4$", together with the N atom which is bonded to them, denote a pyridinium ring or hydrogen.

4. Naphtholsulphonic acid compounds which, in the betaine form, correspond to the general formula

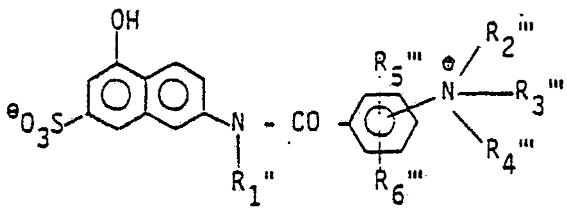

wherein

$R_1$" denotes hydrogen or methyl,

$R_2$"', $R_3$"' and $R_4$"', independently of one another, denote $C_1$-$C_4$-alkyl which is optionally substituted by hydroxyl, chlorine, bromine, cyano or $C_1$-$C_4$-alkoxy, $C_2$-$C_4$-alkenyl, or benzyl or phenylethyl which is optionally substituted by chlorine, bromine, $C_1$-$C_4$-alkyl or $C_1$-$C_4$-alkoxy, and

$R_5$"' and $R_6$"', independently of one another, denote hydrogen, methyl, methoxy, ethoxy, chlorine or bromine.

5. Process for the preparation of naphtholsulphonic acid compounds of Claim 1, characterised in that naphtholsulphonic acids of the formula

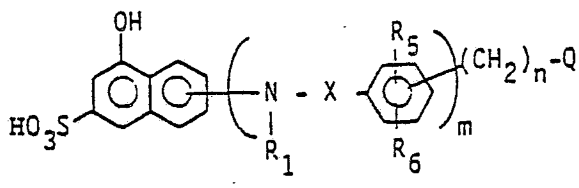

wherein

Q denotes 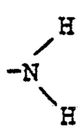 , 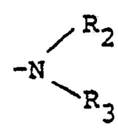 or 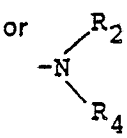

and

X, $R_1$-$R_6$, m and n have the meaning mentioned in Claim 1,

are quaternised, or alkylated and quaternised.

6. Process for the preparation of naphtholsulphonic acid compounds of Claim 1, characterised in that halides of the formula

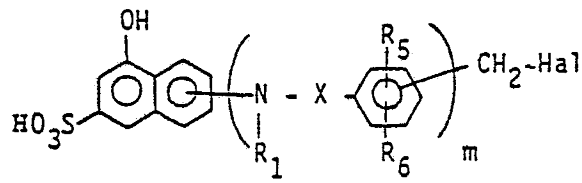

wherein

Hal denotes chlorine, bromine or iodine, and

X, $R_1$, $R_5$, $R_6$ and m have the meaning mentioned in Claim 1,

are reacted with compounds of the formula

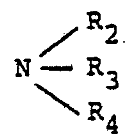

wherein $R_2$, $R_3$ and $R_4$ have the meaning mentioned in Claim 1.

7. Process for the preparation of naphtholsulphonic acid compounds of Claim 1, characterised in that naphtholsulphonic acids of the formula

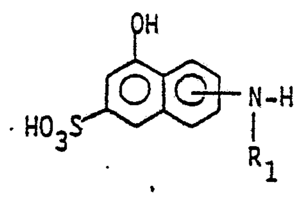

wherein $R_1$ has the meaning mentioned in Claim 1, are reacted with carboxylic acid derivatives or sulphonic acid derivatives of the general formula

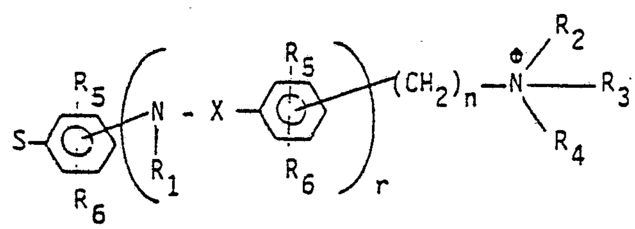

wherein

S denotes a carboxylic acid derivative or sulphonic acid derivative, preferably and acid chloride,

r denotes 0 or 1, and

X, $R_1$-$R_6$ and n have the meaning mentioned in Claim 1.

8. Use of the naphtholsulphonic acid compounds of Claim 1 as coupling components for the preparation of azo dyestuffs.

**Revendications**

1. Des composés d'acide naphtolsulfonique porteurs de groupes ammonium qui, sous la forme bétaïne, répondent à la formule générale

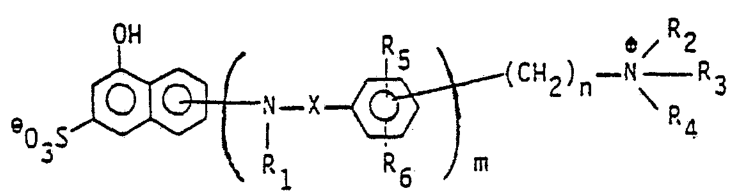

dans laquelle

X représente —CO—, —$SO_2$—,

$R_1$ un hydrogène, un alcoyle,

$R_2$, $R_3$ et $R_4$ représentent, indépendamment, un alcoyle, un alcényle, un aralcoyle,

ou $R_4$ 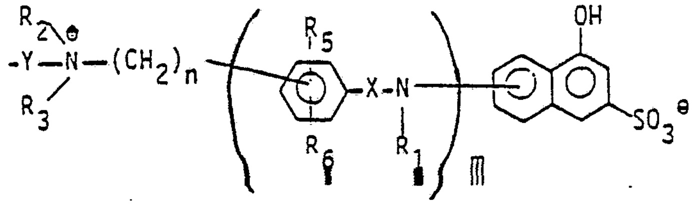

Y un alcoylène, un xylylène,
m 1 ou 2,
n 0 ou 1,
$R_5$ et $R_6$ représentent, indépendamment, un hydrogène, un alcoyle, un alcoxy, un halogène et, en outre, lorsque n = 1,
$R_2$ ou $R_4$ représente un amino, un alcoylamino, un dialcoylamino, un aryle, un cycloalcoyle,
$R_2$ et $R_3$ représentent, conjointement avec l'atome d'azote auquel ils sont liés, un cycle penta- ou hexagonal,
$R_2$, $R_3$ et $R_4$ représentent, conjointement avec l'atome auquel ils sont liés, un noyau pyridinium, un groupe de formule

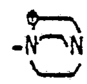

ou un hydrogène,
Y un arylène, un benzylène ou un résidu de formule

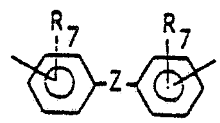

Z la liaison directe, $(CH_2)_p$—, —O—, —$O(CH_2)_p$—O—, —$SO_2$—, —NHCO—, —NHCONH—, —$NHCO(CH_2)_p$—CONH—, —CONH—$(CH_2)_p$ —NHCH—,
p 1, 2 ou 3 et
$R_7$ un hydrogène, un alcoyle, un alcoxy, un halogène et dans laquelle les résidus cycliques et acycliques peuvent contenir des substituants non ionogènes.

2. Composés d'acide naphtholsulfonique qui, sous la forme bétaïne, répondent à la formule générale

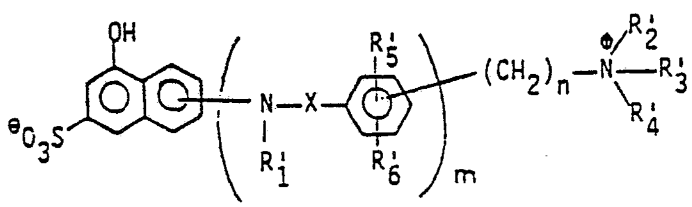

dans laquelle
X représente —CO— ou —$SO_2$—,
$R_1'$ un hydrogène ou un alcoyle en $C_1$-$C_4$, éventuellement substitué par un hydroxy, un halogène, un cyano ou un alcoxy en $C_1$-$C_4$,
$R_2'$, $R_3'$ et $R_4'$ représentent, indépendamment, un alcoyle en $C_1$-$C_4$, éventuellement substitué par un hydroxy, un halogène, un cyano ou un alcoxy en $C_1$-$C_4$, un alcényle en $C_2$-$C_4$ ou un benzyle ou phényléthyle, éventuellement substitué par un halogène, un alcoyle en $C_1$-$C_4$ ou un alcoxy en $C_1$-$C_4$,
ou $R_4'$ représente

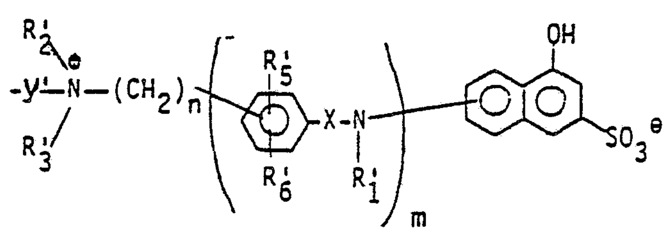 ,

Y' un alcoyle en $C_1$-$C_8$ éventuellement substitué par un hydroxy, un halogène, un cyano ou un alcoxy en $C_1$-$C_4$ ou un xylylène, éventuellement substitué par un halogène, un alcoyle en $C_1$-$C_4$ ou un alcoxy en $C_1$-$C_4$,

m 1 ou 2,

n 0 ou 1,

$R_5'$ et $R_6'$ représentent, indépendamment, un hydrogène, un alcoyle en $C_1$-$C_4$, un alcoxy en $C_1$-$C_4$ ou un halogène et en outre,

lorsque n = 1

$R_2'$ ou $R_4'$ représente un amino, un alcoylamino en $C_1$-$C_4$ ou un dialcoylamino en $C_1$-$C_4$, éventuellement substitué par un hydroxy, un halogène, un cyano ou un alcoxy en $C_1$-$C_4$, un phényle, éventuellement substitué par un hydroxy, un halogène, un cyano, un alcoyle en $C_1$-$C_4$ ou un alcoxy en $C_1$-$C_4$ ou un cyclopentyle ou cyclohexyle, éventuellement substitué par un alcoyle en $C_1$-$C_4$,

$R_2'$ et $R_3'$ représentent, conjointement avec l'atome de N auquel ils sont liés, une pyrrolidine, pipéridine, morpholine, pipérazine ou N-hydroxyéthylpipérazine éventuellement substitué par un alcoyle en $C_1$-$C_4$,

$R_2'$, $R_3'$ et $R_4'$ représentent, conjointement avec l'atome de N auquel ils sont liés, un noyau pyridinium, un groupe de formule

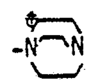

ou un hydrogène et

Y' représente un phénylène, un benzylène, éventuellement substitué par un hydroxy, un halogène, un cyano, un alcoyle en $C_1$-$C_4$ ou un alcoxy en $C_1$-$C_4$ ou un résidu de formule

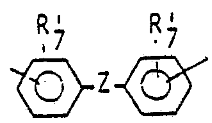

$R_7'$ un hydrogène, un alcoyle en $C_1$-$C_4$, un alcoxy en $C_1$-$C_4$ ou un halogène et

Z et p possèdent la signification de la revendication 1.

3. Composés d'acide naphtolsulfonique qui, sous la forme bétaïne, répondent à la formule générale

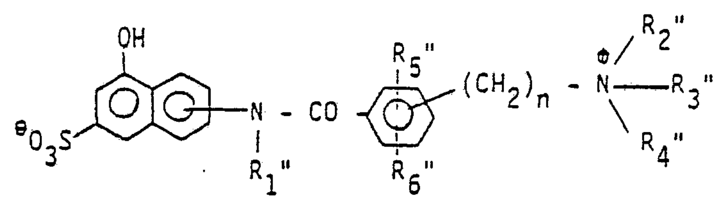

$R_1''$ représente un hydrogène ou un méthyle,

$R_2''$, $R_3''$ et $R_4''$ représentent, indépendamment, un alcoyle en $C_1$-$C_4$, un alcényle en $C_2$-$C_4$, éventuellement substitué par un hydroxy, un chlore, un brome, un cyano ou un alcoxy en $C_1$-$C_4$ ou un benzyle ou phényléthyle éventuellement substitué par un chlore, un brome, un alcoyle en $C_1$-$C_4$ ou un alcoxy en $C_1$-$C_4$,

ou $R_4''$ représente

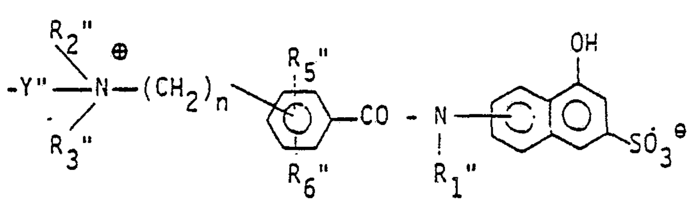

Y'' représente un alcoyle en $C_1$-$C_4$, éventuellement substitué par un hydroxy, un chlore, un brome, un cyano ou un alcoxy en $C_1$-$C_4$ ou un xylylène éventuellement substitué par un chlore, un brome, un alcoyle en $C_1$-$C_4$ ou un alcoxy en $C_1$-$C_4$,

n 0 ou 1

$R_5''$ et $R_6''$ représentent, indépendamment, un hydrogène, un méthyle, un méthoxy, un éthoxy ou un chlore et en outre

lorsque n = 1

$R_2''$ ou $R_4''$ représente un amino, un phényle éventuellement substitué par un hydroxy, un chlore, un brome, un cyano, un alcoyle en $C_1$-$C_4$ ou un alcoxy en $C_1$-$C_4$ ou un cyclopentyle ou cyclohexyle, éventuellement substitué par un alcoyle en $C_1$-$C_4$,

$R_2''$ et $R_3''$ représentent conjointement avec l'atome de N auquel ils sont liés, une pyrrolidine, pipéridine, morpholine, pipérazine, N-méthyl-pipérazine ou N-hydroxyéthylpipérazine et

$R_2''$, $R_3''$ et $R_4''$ représentent, coinjointement avec l'atome de N auquel ils sont liés, un noyau pyridinium ou un hydrogène.

4. Composés d'acide naphtosulfonique qui, sous la forme bétaïne, répondent à la formule générale

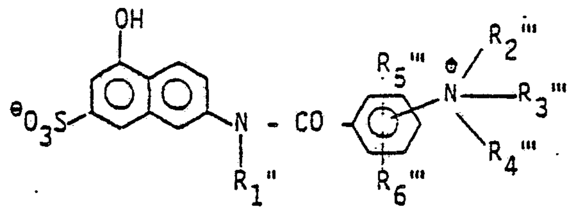

dans laquelle

$R_1''$ représente un hydrogène ou un méthyle,

$R_2'''$, $R_3'''$ et $R_4'''$ représentent, indépendamment, un alcoyle en $C_1$-$C_4$, un alcényle en $C_2$-$C_4$ éventuellement substitué par un hydroxy, un chlore, un brome, un cyano, ou un alcoxy en $C_1$-$C_4$ ou un benzyle ou phényléthyle éventuellement substitué par un chlore, un brome, un alcoyle en $C_1$-$C_4$ ou un alcoxy en $C_1$-$C_4$ et

$R_5'''$ et $R_6'''$ représentent, indépendamment, un hydrogène, un méthyle, un méthoxy, un éthoxy, un chlore ou un brome.

5. Procédé pour la préparation de composés d'acide naphtolsulfonique selon la revendication 1, caractérisé en ce que l'on quaternise ou que l'on alcoyle et quaternise des acides naphtolsulfoniques de formule

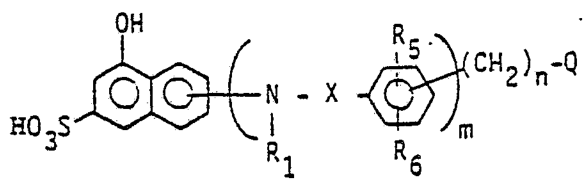

dans laquelle

Q représente 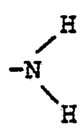 , 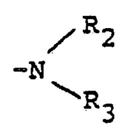 ou 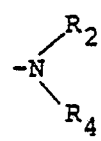

et X, $R_1$-$R_6$, m et n possèdent la signification indiquée dans la revendication 1.

6. Procédé pour la préparation de composés d'acide naphtolsulfonique selon la revendication 1, caractérisé en ce que l'on fait réagir des halogénures de formule

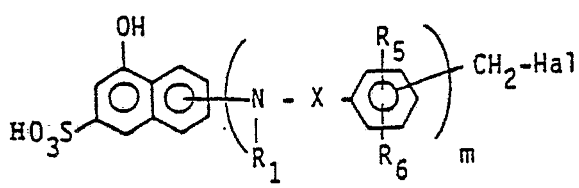

dans laquelle

Hal représente du chlore, du brome ou de l'iode et

X, $R_1$, $R_5$, $R_6$ et m possèdent la signification indiquée dans la revendication 1,

avec des composés de formule

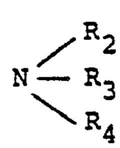

dans laquelle

$R_2$, $R_3$ et $R_4$ possèdent la signification indiquée dans la revendication 1.

7. Procédé pour la préparation de composés d'acide naphtolsulfonique selon la revendication 1, caractérisé en ce que l'on fait réagir des acides naphtolsulfoniques de formule

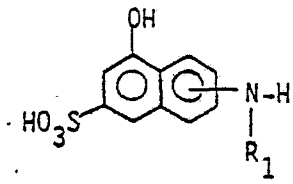

dans laquelle

$R_1$ possède la signification indiquée dans la revendication 1, avec des dérivés d'acides carboxyliques ou sulfoniques de formule générale

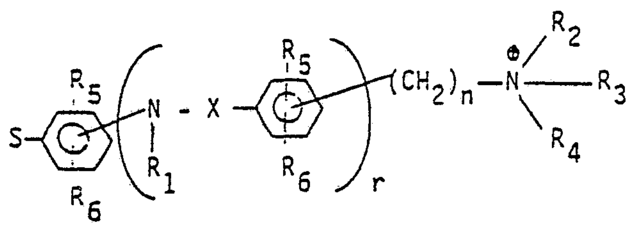

dans laquelle

S représente un dérivé d'acide carboxylique ou sulfonique, de préférence un chlorure d'acide,

r représente 0 ou 1, et

X, $R_1$-$R_6$ et n possèdent la signification indiquée dans la revendication 1.

8. Utilisation des composés d'acide naphtolsulfonique de la revendication 1 en tant que constituants de copulation pour la préparation de colorants azoïques.